Europäisches Patentamt

(19) European Patent Office

Office européen des brevets

(11) EP 1 301 653 B1

(12) FASCICULE DE BREVET EUROPEEN

(45) Date de publication et mention
de la délivrance du brevet:
17.12.2003 Bulletin 2003/51

(51) Int Cl.⁷: C23C 18/16

(21) Numéro de dépôt: 01971594.5

(22) Date de dépôt: 08.10.2001

(86) Numéro de dépôt international:
PCT/CH01/00608

(87) Numéro de publication internationale:
WO 02/031220 (18.04.2002 Gazette 2002/16)

(54) **LAME DE COUCHAGE ET PROCEDE DE FABRICATION D'UNE LAME DE COUCHAGE**

BESCHICHTIGUNGSKLINGE UND VERFAHREN ZUR HERSTELLUNG

COATING BLADE AND METHOD FOR MAKING SAME

(84) Etats contractants désignés:
AT BE CH CY DE DK ES FI FR GB GR IE IT LI LU
MC NL PT SE TR

(30) Priorité: 10.10.2000 EP 00810931

(43) Date de publication de la demande:
16.04.2003 Bulletin 2003/16

(73) Titulaire: BTG Eclépens S.A.
1312 Eclépens (CH)

(72) Inventeurs:
• ADAMOU BRAH, Ibrahim
CH-1162 St-Prex (CH)
• FRETI, Silvano
CH-1162 St-Prex (CH)

(74) Mandataire: Ganguillet, Cyril et al
ABREMA
Agence Brevets & Marques
Ganguillet & Humphrey
Avenue du Théâtre 16
Case postale 2065
1002 Lausanne (CH)

(56) Documents cités:
EP-A- 1 020 542

• PATENT ABSTRACTS OF JAPAN vol. 015, no.
216 (C-0837), 4 juin 1991 (1991-06-04) & JP 03
064595 A (NOMURA TECHNO RES KK;OTHERS:
01), 19 mars 1991 (1991-03-19) cité dans la
demande
• PATENT ABSTRACTS OF JAPAN vol. 017, no.
622 (C-1130), 17 novembre 1993 (1993-11-17) &
JP 05 192629 A (MITSUBISHI HEAVY IND LTD), 3
août 1993 (1993-08-03) cité dans la demande

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne une lame de couchage ainsi qu'un procédé de fabrication d'une lame de couchage.

Les lames de couchage utilisées dans l'industrie papetière pour la fabrication de papier couché se présentent généralement sous forme d'une lame d'acier-ressort, c'est-à-dire d'acier trempé et revenu, de 5 à 12 cm de large, de 0,2 à 1 mm d'épaisseur, à bords droits ou chanfreinés, et dont la longueur peut atteindre plusieurs mètres. Généralement montées dans un porte-lame, elles sont destinées à assurer un dépôt régulier et constant d'une « sauce » sur un papier à coucher, la zone fonctionnelle de la lame, qui est la zone en contact avec la sauce, qui comprend par exemple un bord chanfreiné, étant placé en regard de la surface de la bande de papier en défilement. Le caractère abrasif des composants de la sauce entraîne l'usure de la lame, de sorte que le poids de couche varie avec le temps et que le dépôt devient irrégulier, ce qui rend difficile le maintien d'une qualité constante de papier. La durée de vie moyenne d'une lame d'acier est de l'ordre de 4 à 8 heures. Cela entraîne de nombreux arrêts machine pour le changement de lame et abaisse sensiblement le rendement d'exploitation.

Pour augmenter la durée de vie des lames, on a proposé de revêtir des lames en acier souple d'un revêtement dur sur la partie fonctionnelle de la lame, c'est-à-dire sur la zone où celle-ci entre en contact avec la sauce. Le brevet US 4,660,599 décrit une lame dont la partie fonctionnelle est revêtue au moyen d'une technique de projection thermique d'un revêtement de céramique, par exemple de l'oxyde d'aluminium ou du dioxyde de titane. Le revêtement est obtenu par projection successive de plusieurs couches de particules sur la partie fonctionnelle d'une bande-lame, qui est ensuite tronçonnée en lames.

Le brevet GB 978,988 décrit une lame de crêpage avec un revêtement de particules de céramique, obtenu par technique de « flame plating » de particules de céramique sur une arête d'une bande d'acier qui deviendra, après tronçonnage de la bande en lames, la partie fonctionnelle de la lame.

Le document GB 1,298,609 décrit également une lame de crêpage en acier comportant près de son arête fonctionnelle une bande de céramique déposée dans une cannelure longitudinale par technique de « flame spraying ».

Le document WO 86/07309 décrit une lame de couchage dont la zone fonctionnelle est revêtue d'un dépôt de molybdène ou d'alliage de molybdène par technique de « flame spraying ».

Le document JP 05192629 décrit une lame de couchage munie par déposition chimique d'une sous-couche nickel-phosphore (Ni-P), puis recouverte d'un revêtement dur de carbure de titane (TiC).

Les lames précitées ont une durée de vie nettement plus élevées que celles des lames en acier nues et peuvent atteindre environ 20 heures. Toutefois, l'examen des papiers couchés à l'aide de lames revêtues de céramique montre des défauts de couchage, notamment des microstriures, ce qui est refusé pour des papiers de haute qualité.

on connaît également des lames chromées par dépôt électrolytique. Le document JP 03064595 décrit une lame munie d'une sous-couche de nickel, recouverte d'un revêtement de chrome obtenu par dépôt électrolytique. Ces lames produisent également des papiers couchés présentant des défauts de couchage, dus aux procédés de dépôt électrolytique, qui ne peuvent être évités que par une opération de finition des lames après chromage, qui augmente leur prix de revient.

Le document EP 1020542 a pour objet l'utilisation de solutions de déposition comprenant des sels d'ammonium quaternaire, pour effectuer la codéposition chimique de nickel-phosphore et de particules lubrifiantes (p. ex. PTFE), pour former des films composites de 1 à 30 µm d'épaisseur, d'apparence uniforme.

Le but de la présente invention est d'offrir une lame de couchage ayant une durée de vie élevée et qui ne provoque pas les défauts de couchage constatés avec les lames revêtues précitées.

Ces buts sont atteints grâce à une lame portant un revêtement d'une épaisseur de 30 à 500 µm, comprenant une matrice à base de nickel et des particules dures, constituées d'un matériau de dureté $\geq 8$ (sur l'échelle de Mohs), dispersées dans ladite matrice, sur la partie fonctionnelle de ladite lame. Une telle lame est obtenue par un procédé de fabrication comprenant une étape de codéposition chimique d'un revêtement d'une épaisseur de 30 à 500 µm, comprenant une telle matrice à base de nickel et de telles particules dures sur la partie fonctionnelle d'une bande-lame en acier, et une étape ultérieure de segmentation de la bande-lame revêtue en lames de couchage.

Les particules dures peuvent être des particules de diamant, de carbures ou de céramiques.

La bande-lame peut être plongée dans un bain comprenant au moins un sel de nickel, un réducteur de $Ni^{++}$ et des particules dures en suspension qui sont codéposées en même temps qu'une matrice dont le nickel est le composant majoritaire. La codéposition chimique, dite encore dépôt «electroless», assure une régularité de dépôt remarquable, sans surépaisseurs, notamment sur les arêtes de la lame. La qualité de couchage obtenue est excellente, semblable à celle obtenue avec une lame d'acier souple, neuve, et le papier ne présente pas de microstriures. D'autre part, grâce aux particules dures, l'usure du revêtement est fortement réduite, et la stabilité dans le temps des caractéristiques du couchage est nettement augmentée : la durée de vie de la lame est proche de celle d'une lame à revêtement entièrement en céramique.

Les particules du revêtement sont de préférence choisies parmi les particules mouillables par le bain de déposition, inertes vis-à-vis de ses constituants chimiques et dont la surface n'est pas catalytique (c'est-à-dire non apte au dépôt de Ni). Les particules dures ont des diamètres entre 0,5 à 10 µm.

Pour diminuer le frottement lame/sauce/papier, on peut, de plus, codéposer dans la matrice à base de nickel des particules d'un lubrifiant solide, par exemple du polytétrafluoroéthylène (PTFE), mélangées aux particules dures. Pour ce faire, on ajoute des particules de PTFE en suspension dans le bain. La proportion de particules dans le revêtement varie de préférence entre 5 et 40 % en volume, cette proportion étant choisie selon les applications.

Avant l'immersion dans le bain chimique, la bande-lame peut subir une préparation qui peut comprendre un nettoyage et/ou un dégraissage et/ou un brossage et/ou un électropolissage et/ou une attaque anodique.

Au lieu de revêtir la totalité de la bande-lame, on peut se contenter de revêtir la portion voisine d'un bord latéral, qui deviendra la partie fonctionnelle de la lame, en masquant les surfaces qui ne sont pas destinées à être revêtues. Pour ce faire, et pour minimiser le volume d'un bain de codéposition, on peut enrouler la bande-lame sur un support, de préférence sur une roue-support, en formant un enroulement hélicoidal, les spires de cet enroulement étant séparées les unes des autres par une bande intercalaire constituée d'un matériau inerte vis-à-vis des constituants du bain et dont la surface est non catalytique, de sorte que le nickel ne se dépose pas dessus. De préférence, pendant le processus de codéposition, le support est animé d'un mouvement régulateur lent, par exemple une rotation lente de la roue autour de son axe, pour améliorer la régularité du dépôt et l'uniformité de la distribution des particules dans la matrice. En ne revêtant que la partie fonctionnelle, non seulement on économise des réactifs, mais on évite de modifier les propriétés élastiques de la bande d'acier dans son ensemble. Une bande totalement revêtue sur toute sa surface pourrait présenter un moment de flexion transversale trop important pour certaines applications.

Après l'étape de codéposition, la bande-lame ou les lames tronçonnées peuvent être soumises à un traitement thermique pour modifier les propriétés physiques du revêtement, en particulier pour augmenter sa dureté. Ce traitement est effectué de préférence entre 290°C et 650°C.

Par contre, étant donné la régularité du dépôt obtenu par codéposition chimique, la lame ne nécessite pas de traitement mécanique complémentaire de rectification tel que ponçage, meulage, etc.

D'autres caractéristiques et avantages du procédé selon l'invention et des lames obtenues par ce procédé apparaîtront à l'homme du métier de la description détaillée ci-dessous, en relation avec le dessin, dans lequel :

-   les fig. 1a et 1b représentent schématiquement et en coupe respectivement une bande-lame enroulée avec une bande intercalaire sur une roue-support et une vue de détail agrandie de la même;
-   la fig. 2 est une vue schématique de la bande-lame sur sa roue-support, plongée dans un bain de codéposition chimique;
-   les fig. 3a et 3b représentent respectivement une vue en coupe et une vue de dessus d'un segment de lame revêtue;
-   les fig. 4a et 4b sont deux microphotographies d'une lame revêtue aux grossissements respectifs de 100 fois et 200 fois;
-   la fig. 5 montre des performances comparatives de trois types de lame;
-   les fig. 6a et 6b montrent des microphotographies au grossissement 500 (la barette-étalon représente 5 µm) respectivement d'une lame selon l'invention et d'une lame chromée, usées par un essai de production de papier.

Le procédé selon l'invention utilise la réduction contrôlée de $Ni^{++}$ sur une surface catalytique par un agent réducteur, sans courant électrique et donc sans réaction électrolytique, l'énergie de la réaction étant fournie par la chaleur du bain. L'agent réducteur est de préférence un hypophosphite, un aminoborane ou un borohydrure, de sorte que la réaction chimique entraîne le dépôt d'une matrice Ni-P ou de Ni-B. Cette technique de dépôt de revêtements de Nickel est connue en soi, notamment dans les industries automobiles et aéronautiques.
Un bain est constitué de :

-   une source de nickel. Il s'agit généralement d'un sel de nickel, en particulier chlorure ou sulfate de nickel;
-   un agent réducteur de $Ni^{++}$ : les réducteurs les plus couramment utilisés sont des hypophosphites alcalins tels que l'hypophosphite de sodium, ou des amino-boranes notamment le N-dimethylborane (DMBA) ou le N-diéthylborane (DEAB), ou des borohydrures alcalins tels que le borohydrure de sodium;
-   un additif pour mieux contrôler le dépôt de Ni et le circonscrire à la surface destinée à recevoir le dépôt, souvent appelée surface catalytique; on peut employer notamment l'acide citrique ou l'acide glycolique;
-   un tampon pour contrôler le pH, tel que des tampons acétate, propionate ou succinate;
-   optionnellement un accélérateur de réaction, tel que l'acide succinique, ou
-   un inhibiteur pour limiter la vitesse de réaction, par exemple un molybdate ou un composé sulfureux tel que la thiourée.

Dans les bains à base d'hypophosphite, les mécanismes chimiques peuvent être résumés, de façon non-exhaustive, par les réactions suivantes :

$$(H_2PO_2)^- + H_2O \rightarrow H^+ + (HPO_3)^{2-} + 2H \qquad (1)$$

$$Ni^{2+} + 2H \rightarrow Ni + 2H^+ \qquad (2)$$

$$(H_2PO_2)^- + H \rightarrow H_2O + OH^- + P \qquad (3)$$

$$(H_2PO_2)^- + H_2O \rightarrow H^+ + (HPO_3)^{2-} + H_2 \qquad (4)$$

Parmi les produits de la réaction, on notera en particulier :

- la formation de $H^+$, ce qui entraîne l'abaissement progressif du pH du bain et de la vitesse de déposition et augmente la teneur en P du dépôt. Pour contrôler la vitesse de déposition et la teneur en P, on utilise d'une part des tampons tels que ceux précités et, d'autre part, on peut, après titration périodique du bain, ajuster le pH de la solution tout au long de l'étape de déposition;
- la formation de $(HPO_3)^{2-}$ : son accumulation entraîne la codéposition d'orthophosphites avec Ni et P, donnant un dépôt poreux avec beaucoup de tensions internes. L'ajout d'acide citrique augmente la solubilité de $(HPO_3)^{2-}$ et évite son dépôt.

Dans les bains à base d'hypophosphites, la température doit être maintenue entre 80°C et 95°C. 5 kg d'hypophosphite de sodium sont en moyenne nécessaires pour réduire 1 kg de Ni.

Dans les bains à base d'aminoboranes, on peut opérer à plus faible température, de l'ordre de 60°C à 75°C, et à des valeurs de pH comprises entre 5 et 9. L'abaissement du pH, du fait de la réaction de dépôt, est moins important que dans le cas des bains d'hypophosphites et nécessite une moindre correction. L'accumulation du sous-produit de réaction $(BO_2)^-$ a peu d'effet sur le processus de déposition de Ni-B.

Dans les bains à base de borohydrures, le pH doit par contre être réajusté et maintenu en permanence au-dessus de 12, par exemple à l'aide d'hydroxyde alcalin, pour éviter la décomposition du réactif. Les borohydrures sont les agents réducteurs de nickel les plus puissants : 0,6 kg suffisent à réduire 1 kg de nickel.

**Exemples de bain**

Exemple 1 :

Chlorure de Ni (45 g/l)
Hypophosphite de Na (11 g/l)
Chlorure d'Amonium (50 g/l)
Citrate de Na (100 g/l)
A un pH = 8,5-10 et à une température = 90°C - 95°C, la vitesse de dépôt est de l'ordre de 10 $\mu$m/h

Exemple 2 :

Sulfate de Ni (21 g/l)
Hypophosphite de Na (24 g/l)
Acide lactique (28 g/l)
Acide propionique (2,2 g/l)
A un pH = 4-6 et à une température = 88°C - 95°C, la vitesse de dépôt est de l'ordre de 25 $\mu$m/h

Exemple 3 :

Chlorure de Ni (30 g/l)
DEAB (3 g/l)
Isopropanol (50 g/l)
Citrate de Na (10 g/l)
Succinate de Na (20 g/l)
A un pH = 5-7 et à une température = 65°C, la vitesse de dépôt est de 7-12 μm/h

Exemple 4 :

Chlorure de Ni (30 g/l)
DMAB (3-4,8 g/l)
Acétate de K (18-37 g/l)
A un pH = 5,5 et à une température = 70°C, la vitesse de dépôt est de l'ordre de 7 à 12 μm/h

Exemple 5 :

Chlorure de Ni (21 g/l)
Borohydrure de Na (0,4 g/l)
Hydroxyde de Na (90 g/l)
1,2- Diaminoéthane (90 g/l)
Sulfate de Thallium (0,4 g/l)
A un pH de 12,5-13 et à une température de 90°C - 95°C, la vitesse de dépôt atteint 25-30 μm/h.

Les conditions opératoires des bains sont de préférence ajustées et maintenues de telle sorte que dans le revêtement, une matrice Ni-P comprend 5 - 11 % en poids de P, ou qu'une matrice de Ni-B comporte 2 - 6 % en poids de B.

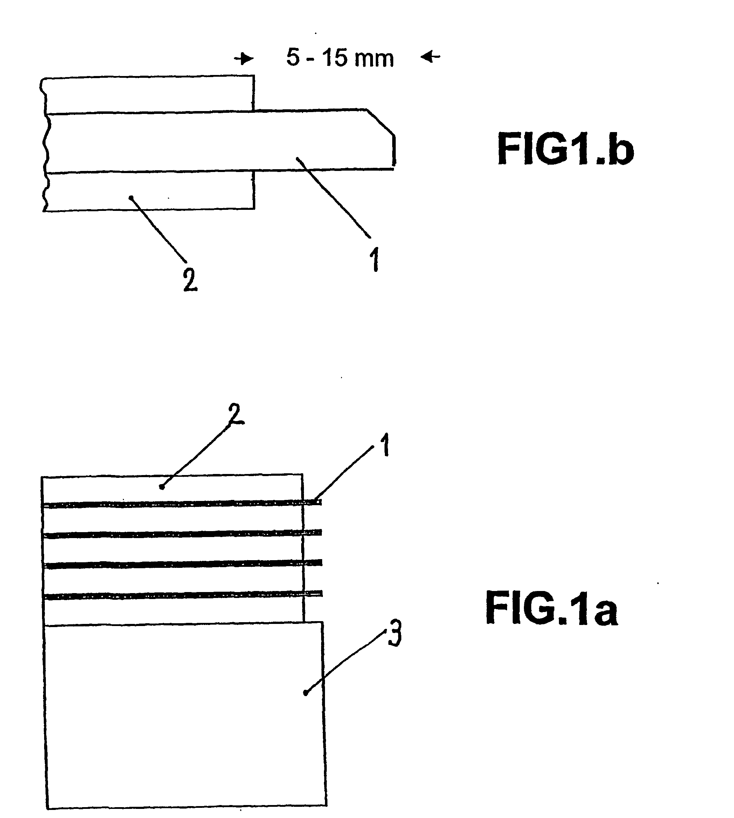

La fig. la représente schématiquement une bande-lame 1 enroulée avec une bande intercalaire 2 de matériau non catalytique sur une roue-support 3. La fig. 1b montre une vue de détail agrandie de la même, prête pour le traitement. Seul le bord fonctionnel de la future lame reste dégagé de l'enroulement de la bande intercalaire, typiquement sur une largeur de 5 à 15 mm. Mais cette largeur peut être inférieure ou supérieure à ces valeurs.

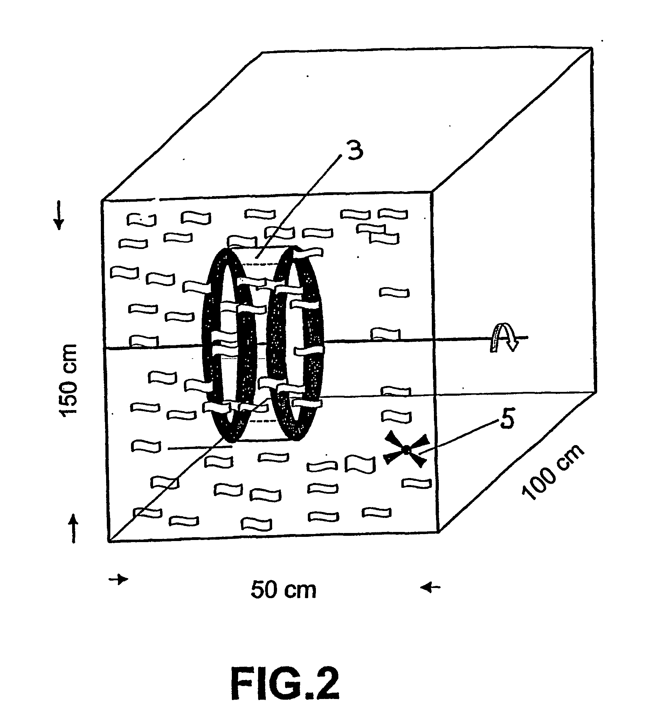

Pendant toute la durée du traitement de codéposition, la roue-support 3 tourne pour améliorer la régularité du dépôt, comme l'illustre la fig. 2, mais à vitesse suffisamment lente pour ne pas influencer négativement le processus de codéposition. Le bain est maintenu à température constante et constamment brassé (5) pour maintenir en suspension les particules de céramique. Les particules de céramique sont choisies parmi les particules mouillables par le bain chimique, inertes vis-à-vis des constituants précités du bain et essentiellement non-catalytiques, c'est-à-dire que le dépôt de la matrice à base de Nickel a lieu essentiellement sur la surface de la bande-lame et non pas à la surface des particules en suspension. Des particules d'oxyde d'aluminium (alumine), de zirconium, de chrome, de carbure de silicium, de dureté généralement comprise entre 8 et 9,5 (échelle de Mohs) sont des céramiques utilisables. On peut également utiliser des particules d'autres carbures ou de diamant. La quantité de particules mises en suspension varie généralement entre 5 et 50 % du volume du bain. Pour des dépôts généralement compris entre 30 et 500 μm, et plus particulièrement 30 et 250 μm d'épaisseur, des particules de diamètre compris entre 0,5 et 10 μm conviennent. La proportion de particules dans le bain est ajustée de telle sorte à obtenir une proportion de particules dans le revêtement comprise entre 5 et 40 % en volume de celui-ci.

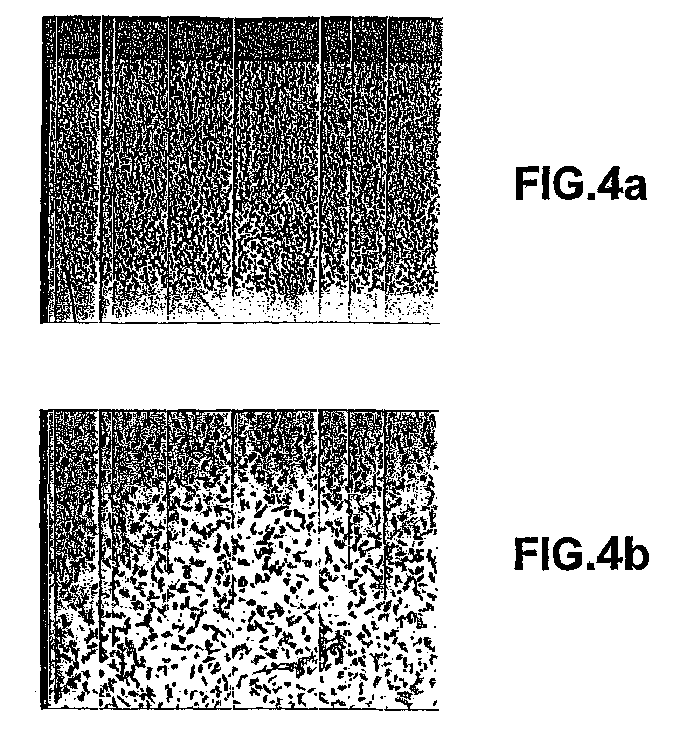

Les microphotographies de portions de revêtement des figures 4a et 4b montrent que la répartition des particules dans le revêtement est statistiquement homogène, d'où il résulte une homogénéité des propriétés macroscopiques de surface et notamment une homogénéité au niveau de l'usure de la lame après plusieurs heures de service.

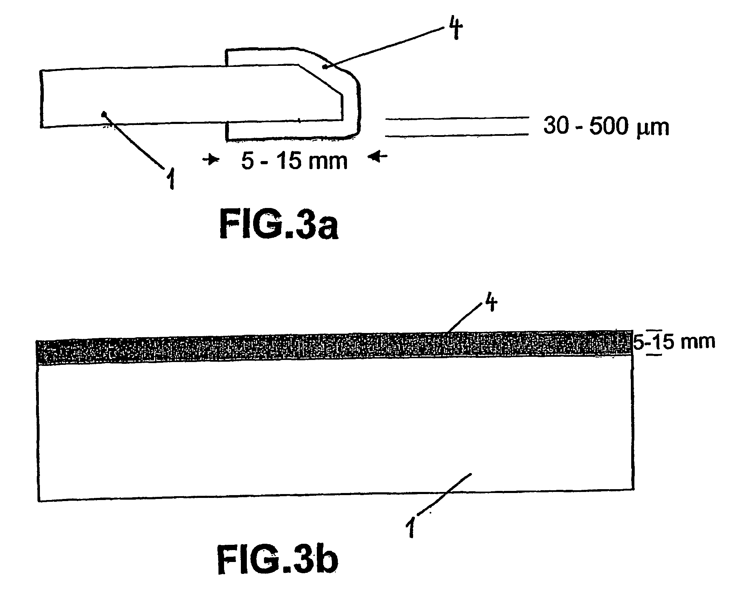

L'examen microscopique de coupes de lames, représentées schématiquement à la fig. 3a, montre également que le dépôt suit fidèlement la géométrie de la lame, que l'épaisseur du dépôt est homogène. Il n'y a pas de surépaisseur ou d'absence de dépôt au niveau des angles de la lame d'acier; le dépôt forme un arrondi au niveau de ces angles. Il en résulte qu'il n'est pas nécessaire d'usiner la lame après le dépôt pour en rectifier le profil. Un polissage peut toutefois être effectué.

La partie fonctionnelle revêtue grâce au procédé de codéposition présente une dureté Hv0.1 de 500 à 700 unités. Toutefois, un traitement thermique entre 220°C et 650°C après la codéposition améliore la dureté et l'adhérence du dépôt au substrat. La dureté Hv0.1 peut atteindre 1100 unités après traitement thermique et peut même dépasser 1300 unités (Hv0.1 désigne la microdureté Vickers sous charge de 0.1 kg).

Un dépôt Ni-P est amorphe après déposition. Un traitement thermique à une température entre 220°C et 260°C entraîne un début de transformation de phase du dépôt NiP avec l'apparition de la phase $Ni_3P$.

Un traitement thermique à température plus élevée, vers 320°C à 350°C, entraîne la cristallisation du dépôt, qui perd ainsi son caractère amorphe, et sa transformation en alliage biphasé. Le diagramme de phase Ni-P indique un eutectique à 11 % de poids de Ni. Le choix du % de P détermine les caractéristiques mécaniques du dépôt selon la proportion des phases nickel et phosphites de nickel.

Ce changement de structure est accompagné d'une augmentation de la dureté du dépôt qui passe de Hv0.1 $\simeq$ 500 - 700 à des valeurs de Hv0.1 d'au moins 900 et généralement $\geq$ 1000.

Ce changement de structure s'accompagne aussi d'une diminution de la ductilité du dépôt et de la résistance à la corrosion, à cause de la baisse du % de P, due à la formation de phosphite de nickel (voir exemple 7).

Pour le couchage de papiers, la plage de 5 $\leq$ % P $\leq$ 10 est apparue propice pour allier la ductilité du nickel et la dureté des phosphites de nickel et obtenir un dépôt à la fois dur et tenace.

Dans d'autres applications, le dépôt Ni-P est le plus souvent utilisé pour sa résistance à la corrosion. De ce fait, le traitement thermique après déposition, qui diminue la résistance à la corrosion, est évité ou alors effectué à des températures assez basses, d'environ 260°C à 270°C, qui améliorent la dureté sans trop diminuer la résistance à la corrosion. Pour l'application au couchage de papier, les présents inventeurs ont estimé que la dureté et la ténacité sont les propriétés les plus importantes, la résistance à la corrosion étant secondaire; c'est pourquoi, afin d'améliorer la durée de vie des lames de couchage revêtues de composite Ni P/SiC selon l'invention, il est préférable d'adopter un traitement thermique post-déposition entre 290°C et 650°C, températures plus élevées que les températures évoquées ci-dessus. Cette plage de température et un % P adéquat (5 $\leq$ % P $\leq$ 10) permettent d'améliorer par diffusion l'adhérence du dépôt au substrat, d'atteindre la dureté la plus élevée tout en gardant au dépôt une ténacité suffisante et sans altérer les caractéristiques mécaniques du substrat indispensables au bon fonctionnement des lames (voir exemple 8).

Exemple 7 :

Effet du traitement thermique sur la résistance à la corrosion dans une solution à 10 % HCl.
Cas d'un dépôt à 10,5 % P :

Tableau 1

| Traitement thermique | Dureté Hv0.1 | Vitesse de corrosion ($\mu$m / an) |
|---|---|---|
| Sans | 480 | 15 |
| 290°C / 10h | 970 | 1400 |
| 400°C / 1h | 1050 | 1200 |

Exemple 8 :

Effet de la température des traitements thermiques de durcissement sur la dureté du revêtement NiP / SiC.
Cas d'un dépôt à 7 % P :

1. Montée linéaire à 300°C en 2 h - maintien 8 h à 300°C, redescente à température ambiante en 2 h : la dureté Hv0.1 obtenue est de 1050.
2. Montée linéaire à 450°C en 3 h - maintien 1 h à 450°C, redescente à température ambiante en 3 h : la dureté Hv0.1 obtenue est de 1100.

Les caractéristiques des lames selon l'invention sont donc modulables par la nature, la granulométrie et la proportion des grains de céramique dans la matrice, la composition de la matrice elle-même et le traitement thermique post-déposition. Les propriétés des lames selon l'invention sont donc largement ajustables en fonction des applications, elles peuvent être aussi bien proches de celles d'une lame en acier non revêtue que de celles de lames revêtues exclusivement de céramique, ou encore être différentes des unes et des autres. Les exemples suivants montrent les propriétés comparatives de plusieurs lames.

Exemple 9 :

Comparaison d'une lame revêtue Ni-P-SiC avec une lame revêtue de céramique et une lame en acier non revêtue, en couchage en « mode raclant »

Conditions d'essai :

Couchage en ligne, tête de couchage avec porte-lame ABC (BTG Källe Inventing AB, Suède)
Type de papier : papier fin
Vitesse d'avancement du papier : 768 m/min
Sauce : 65 % de matière solide (kaolin, $CaCo_3$)
Angle de travail : 20°
Poids de couche : 10 $g/m^2$, « couché une fois »
Caractéristiques de la lame Ni-P-SiC : longueur 3700 mm, épaisseur nominale 0,457 mm, revêtement 70 µm

Lames de comparaison :

   a) Lame céramique « Duroblade » (TM de BTG Eclépens) de mêmes dimensions
   b) Lame en acier de mêmes dimensions

Résultats :

durée de vie :

- lame acier : 8 heures,
- lame revêtue Ni-P-SiC : supérieure à 17 heures,
- lame revêtue de céramique : 24 heures

L'essai avec la lame revêtue Ni-P-SiC a été arrêté après 17 heures pour cause de panne de la machine de couchage alors que la lame n'était pas encore totalement usée.

Exemple 10 :

Comparaison d'une lame d'acier et d'une lame revêtue Ni-P-SiC en « mode lissant »

conditions d'essai :

- coucheuse Voith en mode lissant
- vitesse de couchage : 324 - 340 m/min
- lames utilisées en « top-couche »:

   - angle du porte-lames : 24°
   - angle de travail : 5° à 6,5°

- type de sauce : 68 % de solide à base de $CaCo_3$, viscosité 880 à 900 CPS
- lames :

   - a) acier, longueur 4900 mm, épaisseur nominale 0,381 mm, revêtement Ni-P-SiC 70 µm
   - b) acier, longueur 4900 mm, épaisseur nominale 0,381 mm, non revêtue

Résultats : le poids total de couche déposé est de 21 $g/m^2$, dont 12 $g/m^2$ en pré-couche et 9 $g/m^2$ en top-couche; état de surface du papier couché : rugosité PPS = 1,03-1,36.
Le poids de couche reste quasiment constant, variant entre 21 et 23 $g/m^2$ en 20 heures de fonctionnement avec la lame Ni-P-SiC, alors que le poids de couche ne reste constant et l'état de surface du papier couché acceptable que pendant 8 à 10 heures avec la lame en acier.

La durée de vie de la lame revêtue Ni-P-SiC est donc le double de celle de la lame non revêtue. A noter que, dans ces conditions opératoires, les lames revêtues de céramique ne permettent pas d'obtenir la qualité de papier couché exigé.

Exemple 11 :

Comparaison d'une lame revêtue Ni-P-SiC, d'une lame « Duroblade » à revêtement en céramique commercialisée par BTG Eclépens S.A. et d'une lame chromée du commerce.

Les substrats en acier des trois types de lames ont tous les mêmes dimensions, à savoir épaisseur nominale 0,508 mm, largeur 100 mm, longueur 780 mm. La lame selon l'invention porte un revêtement Ni-P-SiC de 30 µm d'épaisseur, la lame céramique porte un revêtement de 150 microns d'épaisseur, la lame chromée porte un revêtement de chrome de 50 µm d'épaisseur.

Conditions d'essai :

- Porte lame ABC inversé, lame de pression à environ 5 mm de la pointe de la lame avec « backing roll » de type 65 PJ de Trelleborg.
- Angles des lames : 30°
- Papier : fin, pâte chimique, précouché à 112 g/m$^2$, de type Multiart Silk

Sauce : 63 % de solides, pour une viscosité de 1000 -1200 cps; le matériau solide comprend 30 parties d'argile (SPS) pour 40 parties de Kaolin ultrawhite (Engelhart), 30 parties de carbonate de calcium HC 90 (Omya), 14 parties de latex DL 950 (Dow), 0,20 parties de Kenores 1420 (Casco Nobel) et 0,30 parties de carboxyméthylcellulose CMC FF 10 (Metsa Serla).

La vitesse de couchage est maintenue à 500 m/min pour tous les essais.

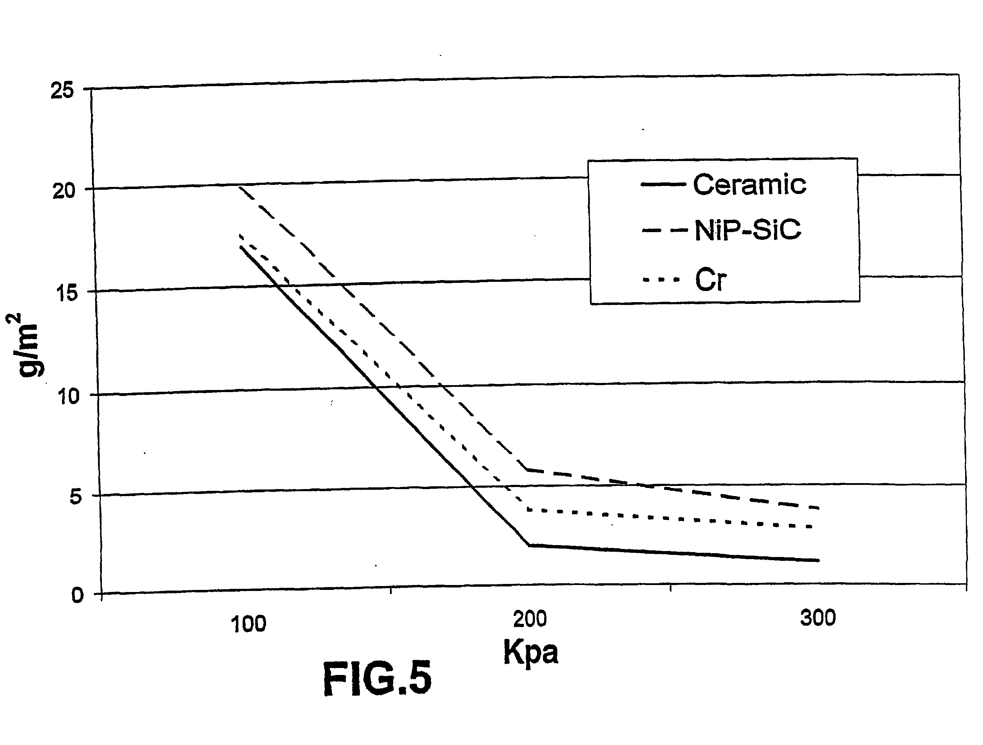

Dans un premier essai, la pression différentielle est ajustée successivement à 100, 200 et 300 kpa. La figure 5 montre en ordonnée les poids de couchage en g/m$^2$ obtenus pour les trois types de lames, la pression différentielle en Kpa étant en abscisse. A ces trois pressions différentielles, on constate que la lame Ni-P-Sic permet un passage de sauce plus important que les deux autres matériaux, toutes conditions égales par ailleurs. La lame Ni-P-SiC permet donc un meilleur contrôle du profil de couche dans le « sens travers ».

Dans un deuxième essai, une bobine complète de papier a été couchée avec chaque type de lame en visant un poids de couche uniforme de 10 g/m$^2$. Dans ces conditions, il est plus difficile d'ajuster un poids de couche constant avec la lame chromée qu'avec les deux autres. L'examen de la forme de la pointe des lames chromées montre que leur géométrie n'est pas constante, d'où une variabilité du poids de couche. Les essais comparatifs de rugosité et de lissé du papier donnent les résultats résumés dans le tableau 2.

Tableau 2

| Type de lame | Lissé Bendtsen | Rugosité PPS |
|---|---|---|
| Céramique | 14 | 1,41 |
| Ni-P-SiC | 16 | 1,69 |
| Chrome | 38 | 1,85 |

Un test qualitatif de la couverture des fibres basé sur un test à l'encre Kroda donne le classement suivant :

1. lame revêtue Ni-P-Sic
2. lame céramique BTG-Eclépens
3. lame chromée

Exemple 12 :

Essai comparatif de production de papier couché entre lame de couchage selon l'invention (Ni-P/SiC) et lame chromée du commerce.

**Lames :**

Les substrats en acier des deux types de lames ont tous les mêmes dimensions, à savoir épaisseur nominale 0,508 mm, largeur 76,2 mm, longueur 3730 mm.

La lame selon l'invention porte un revêtement Ni-P/SiC de 70 microns d'épaisseur, dont les particules SiC sont plus petites que 5 microns.

La lame chromée porte un revêtement Cr de 35 microns d'épaisseur.

Toutes les lames sont biseautées à 40 degrés.

**Conditions d'essais :**

Machine de couchage « off-line » 4 têtes, essais sur tête 4 (côté feutre de la formation de la feuille), type MHI-Beloit S-matic, poids de couche visé : 10g/m$^2$ par tête.

Papier type A2 (papier d'art), grammage final 127.9 g/m$^2$, vitesse 950 m/min.

Sauce de couchage; 62-63 % solides, viscosité 700-800 cps.

Angle du porte lame : 43,2 degrés.

Rouleau No 8, couché tête 4 avec lame chromée.

Rouleau No 11, couché tête 4 avec lame selon l'invention.

Après couchage, les rouleaux sont Super Calandrés puis des mesures quantitatives sont effectuées pour caractériser la surface du papier couché.

Les résultats de la surface « feutre » sont reportés dans le tableau 3 ci après :

Tableau 3

|  | Rouleau 11 | | | Rouleau 8 | | |
|---|---|---|---|---|---|---|
| Position échantillon | CC | Milieux | CT | CC | Milieux | CT |
| Brillance (%) (ISO 2813, 60deg) | 79 | 79 | 78 | 78 | 77 | 78 |
| Lissé Beck (sec) (ISO 5627) | 7200+/- 500 | | | 6000+/-500 | | |
| CC=côté conducteur CT=côté transmission | | | | | | |

On constate que, par rapport à la lame chromée dont la matière est exempte de phases renforçantes, les résultats avec la lame selon l'invention sont non seulement équivalents pour ce qui est de la brillance mais surpassent la lame chromée pour ce qui est du lissé de surface.

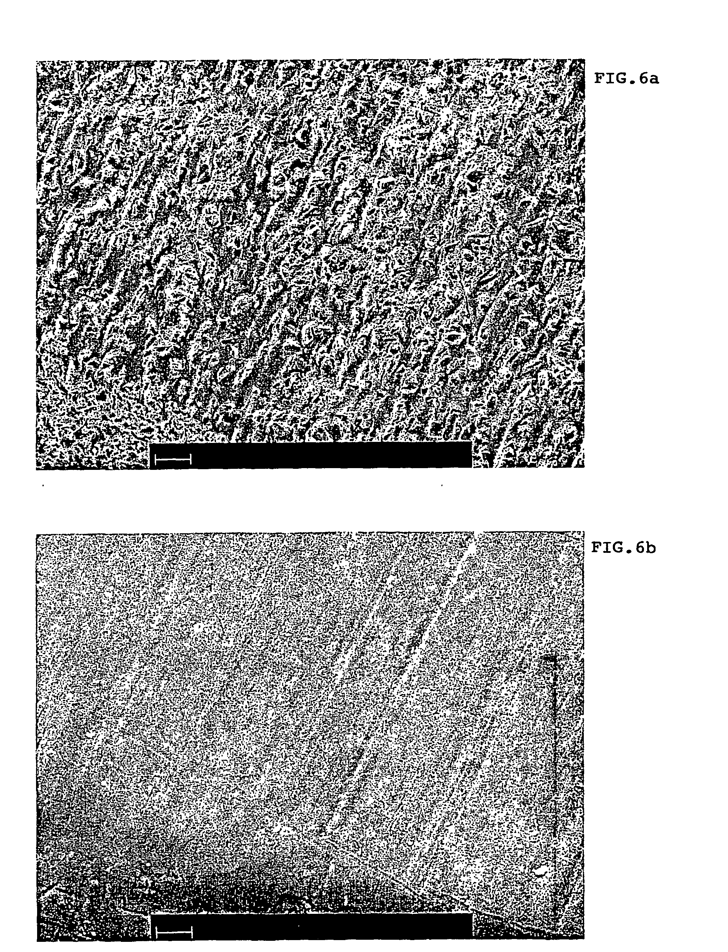

Ces constatations sont tout à fait inattendues : un revêtement selon l'invention présente à l'analyse microscopique de la surface usée au cours de l'essai une topographie d'érosion préférentielle de la matrice comme le montre la fig. 6a. Ce faciès d'usure n'est donc pas reporté sur la surface du papier couché. Au contraire, la lame chromée usée ne présente pratiquement pas d'érosion différentielle de sa surface, comme le montre la fig. 6b, alors que la qualité de papier obtenue est inférieure.

Les essais ci-dessus montrent que la lame revêtue Ni-P-SiC présente de très bonnes performances pour ce qui est de la qualité de la surface couchée. Il est surprenant de constater l'excellente qualité du papier couché, notamment l'absence de microstriures, obtenue avec les lames à revêtement Ni-P-SiC, alors que ce revêtement présente des particules dures discrètes, affleurant ou dépassant de la surface de la matrice Ni-P.

Avec une épaisseur de revêtement Ni-P-Sic faible, de l'ordre de 30 μm, la durée de vie de la lame n'est que légèrement supérieure à celle d'une lame en acier non revêtue, alors qu'avec un revêtement plus épais, on approche la durée de vie d'une lame à revêtement céramique, et ce avec des performances qualitatives supérieures.

**Revendications**

1. Procédé de fabrication d'une lame de couchage, **caractérisé en ce qu'**il comprend une étape de codéposition chimique d'un revêtement d'une épaisseur de 30 à 500 μm sur la partie fonctionnelle d'une bande-lame en acier, ce revêtement comprenant une matrice à base de nickel et des particules d'un diamètre de 0,5 à 10 μm, constituées d'un matériau de dureté ≥ 8 (sur l'échelle de Mohs), et une étape ultérieure de segmentation de la bande-lame revêtue en lames de couchage.

2. Procédé selon la revendication 1, **caractérisé en ce que** la bande-lame en acier est plongée dans un bain comprenant au moins un sel de nickel, un réducteur de Ni$^{++}$ et des particules en suspension, choisies parmi les particules de céramiques, de diamant ou de carbures mouillables par le bain, inertes vis-à-vis de ses constituants et sensiblement non catalytiques, la proportion des particules dans le bain étant comprise entre 5 et 50 % en volume.

**3.** Procédé selon la revendication 2, **caractérisé en ce que** ledit réducteur de $Ni^{++}$ est choisi parmi les hypophosphites, les aminoboranes et les borohydrures.

**4.** Procédé selon l'une des revendications 2 ou 3, **caractérisé en ce que** le bain comprend également des particules d'un lubrifiant solide en suspension, en particulier des particules de PTFE.

**5.** Procédé selon l'une des revendications 1 à 4, **caractérisé en ce que** la bande-lame est partiellement masquée pendant l'étape de codéposition chimique pour délimiter la partie fonctionnelle à revêtir.

**6.** Procédé selon la revendication 5, **caractérisé en ce que** la bande-lame est enroulée sur un support, en particulier une roue-support, en un enroulement hélicoïdal, les spires de l'enroulement étant séparées les unes des autres par une bande intercalaire.

**7.** Procédé selon la revendication 6, **caractérisé en ce que** le support de la bande-lame enroulée est maintenu en un mouvement régulateur pendant l'étape de codéposition.

**8.** Procédé selon l'une des revendications 1 à 7, **caractérisé en ce que** la bande-lame subit une préparation avant l'étape de codéposition chimique, comprenant un nettoyage et/ou un dégraissage et/ou brossage et/ou un électropolissage et/ou une attaque anodique.

**9.** Procédé selon l'une des revendications 1 à 8, **caractérisé en ce que**, après l'étape de codéposition, la bande-lame ou la lame est soumise à un traitement thermique à une température supérieure à 220°C.

**10.** Procédé selon la revendication 9, **caractérisé en ce qu'**une partie du traitement thermique est effectuée entre 290°C et 650°C.

**11.** Lame de couchage portant un revêtement d'une épaisseur de 30 à 500 µm, comprenant une matrice à base de nickel et des particules constituées d'un matériau de dureté ≥ 8 sur l'échelle de Mohs, dispersées dans ladite matrice, sur la partie fonctionnelle de ladite lame.

**12.** Lame selon la revendication 11, **caractérisée en ce que** la matrice comprend 2 à 6 % en poids de B.

**13.** Lame selon la revendication 11, **caractérisée en ce que** ladite matrice comprend 5 à 10 % en poids de P.

**14.** Lame selon l'une des revendications 11 à 13, **caractérisée en ce que** ledit revêtement contient 5 à 40 % en volume de particules.

**15.** Lame selon l'une des revendications 11 à 14, **caractérisée en ce que** ledit revêtement présente une dureté Hv0.1 supérieure à 500.

**16.** Lame selon la revendication 15, **caractérisée en ce que** ledit revêtement présente une dureté Hv0.1 ≥ 900.

**17.** Lame selon l'une des revendications 11 à 16, **caractérisée en ce que** le matériau desdites particules est choisi parmi les oxydes d'aluminium, de zirconium, de chrome, le carbure de silicium et le diamant.

**18.** Lame selon l'une des revendications 11 à 17, **caractérisée en ce que** ledit revêtement a une épaisseur de 30 à 250 µm.

**19.** Lame selon l'une des revendications 11 à 18, **caractérisée en ce que** le revêtement comprend également des particules d'un lubrifiant solide, en particulier des particules en PTFE.

**20.** Utilisation d'une lame selon l'une des revendications 11 à 19 pour le couchage de papier.

**Claims**

1. A method for manufacturing a coating blade, **characterised in that** it comprises a step of chemical co-deposition of a covering having a thickness of between 30 μm and 500 μm on the functional part of a steel blade strip, this covering comprising a nickel-based matrix and particles with a diameter of 0.5 μm to 10 μm, consisting of a material of hardness ≥ 8 (on the Mohs scale), and a subsequent step of segmenting the blade strip into coating blades.

2. A method according to claim 1, **characterised in that** the steel blade strip is submerged in a bath comprising at least a nickel salt, an Ni$^{++}$ reducing agent and particles in suspension, chosen from amongst ceramic, diamond or carbide particles wettable by the bath, inert as regards its constituents and substantially non-catalytic, the proportion of particles in the bath being between 5 % and 50 % by volume.

3. A method according to claim 2, **characterised in that** said Ni$^{++}$ reducing agent is chosen from amongst the hypophosphites, aminoboranes and borohydrides.

4. A method according to either of claims 2 or 3, **characterised in that** the bath also comprises particles of a solid lubricant in suspension, in particular particles of PTFE.

5. A method according to one of claims 1 to 4, **characterised in that** the blade strip is partially masked during the chemical co-deposition step in order to delimit the functional part to be covered.

6. A method according to claim 5, **characterised in that** the blade strip is wound on a support, in particular a support wheel, in a helical winding, the turns of the winding being separated from one another by an insert strip.

7. A method according to claim 6, **characterised in that** the support of the wound blade strip is maintained in a regulating movement during the co-deposition step.

8. A method according to one of claims 1 to 7, **characterised in that** the blade strip undergoes a preparation before the chemical co-deposition step, comprising cleaning and/or degreasing and/or brushing and/or electropolishing and/or an anodic attack.

9. A method according to one of claims 1 to 8, **characterised in that**, after the co-deposition step, the blade strip or the blade is subjected to heat treatment at a temperature above 220° C.

10. A method according to claim 9, **characterised in that** part of the heat treatment is performed between 290°C and 650°C.

11. A coating blade having a covering with a thickness of between 30 μm and 500 μm, comprising a nickel-based matrix and particles consisting of a material of hardness ≥ 8 on the Mohs scale, dispersed in said matrix, on the functional part of said blade.

12. A blade according to claim 11, **characterised in that** the matrix comprises 2 % to 6 % by weight of B.

13. A blade according to claim 11, **characterised in that** said matrix comprises 5 % to 10 % by weight of P.

14. A blade according to one of claims 11 to 13, **characterised in that** said covering contains 5 % to 40 % by volume of particles.

15. A blade according to one of claims 11 to 14, **characterised in that** said covering has an Hv0.1 hardness greater than 500.

16. A blade according to claim 15, **characterised in that** said covering has an Hv0.1 hardness ≥ 900.

17. A blade according to one of claims 11 to 16, **characterised in that** the material of said particles is chosen from amongst the oxides of aluminium, zirconium and chromium, silicon carbide and diamond.

18. A blade according to one of claims 11 to 17, **characterised in that** said covering has a thickness of 30 μm to 250 μm.

**19.** A blade according to one of claims 11 to 18, **characterised in that** the covering also comprises particles of a solid lubricant, in particular particles of PTFE.

**20.** Use of a blade according to one of claims 11 to 19 for the coating of paper.

**Patentansprüche**

**1.** Verfahren zur Herstellung einer Streichrackel, **gekennzeichnet durch** einen Schritt einer chemischen Koabscheidung, auf den funktionellen Teil eines Streichrackel-Bandes aus Stahl, eines Überzugs einer Dicke von 30 bis 500 μm, welcher eine Matrix auf Nickelbasis und Partikel, die aus einem Material mit einer Härte $\geq$ 8 auf der Mohs-Skala bestehen, umfasst, und **durch** einen späteren Schritt des Zerschneidens des Streichrackel-Bandes in Streichrackeln.

**2.** Verfahren gemäss Anspruch 1, **dadurch gekennzeichnet, dass** das Streichrackel-Band in ein Bad getaucht wird, das mindestens ein Nickelsalz, ein Reduktionsmittel von Ni$^{++}$ und in Suspension befindliche Partikel, welche unter Keramik-, Diamant- oder Carbid-Partikeln gewählt werden, welche durch das Ablagerungsbad benetzbar sind, gegenüber dessen Bestandteilen inaktiv sind, und im wesentlichen nicht katalytisch sind, umfasst, wobei der Anteil der Partikel im Bad zwischen 5 und 50 Vol.% beträgt.

**3.** Verfahren gemäss Anspruch 2, **dadurch gekennzeichnet, dass** das Reduktionsmittel von Ni$^{++}$ unter den Hypophosphiten, den Aminoboranen und den Borohydriden gewählt wird.

**4.** Verfahren gemäss einem der Ansprüche 2 oder 3, **dadurch gekennzeichnet, dass** das Bad ebenfalls Partikel eines festen Schmiermittels, insbesondere PTFE-Partikel in Suspension enthält.

**5.** Verfahren gemäss einem der Ansprüche 1 bis 4, **dadurch gekennzeichnet, dass** das Streichrackel-Band während dem Schritt der chemischen Koabscheidung teilweise maskiert ist, um den zu überziehenden funktionellen Teil abzugrenzen.

**6.** Verfahren gemäss Anspruch 5, **dadurch gekennzeichnet, dass** das Streichrackel-Band auf einen Träger aufgerollt wird, insbesondere auf ein Trägerrad, zu einer spiralförmigen Wicklung, wobei die Windungen der Wicklung durch ein dazwischenliegendes Band voneinander getrennt sind.

**7.** Verfahren gemäss Anspruch 6, **dadurch gekennzeichnet, dass** der Träger des aufgewickelten Streichrackel-Bandes während des Koabscheidungsschrittes in eine regulierende Bewegung versetzt ist.

**8.** Verfahren gemäss einem der Ansprüche 1 bis 7, **dadurch gekennzeichnet, dass** vor dem Koabscheidungsschritt das Streichrackel-Band einer Vorbereitung unterzogen wird, die eine Reinigung und/oder eine Entfettung und/oder ein Bürsten und/oder ein Elektropolieren und/oder eine anodische Behandlung umfasst.

**9.** Verfahren gemäss einem der Ansprüche 1 bis 8, **dadurch gekennzeichnet, dass** nach dem Koabscheidungsschritt das Streichrackel-Band oder die Streichrackel einer Wärmebehandlung bei einer Temperatur oberhalb 220°C unterzogen wird.

**10.** Verfahren gemäss Anspruch 9, **dadurch gekennzeichnet, dass** ein Teil der Wärmebehandlung zwischen 290°C und 650°C ausgeführt wird.

**11.** Streichrackel, die auf dem funktionellen Teil der Streichrackel einen Überzug mit einer Dicke von 30 bis 500 μm trägt, der eine Matrix auf Nickelbasis und Partikel umfasst, die aus einem Material mit einer Härte $\geq$ 8 auf der Mohs-Skala bestehen und die in der genannten Matrix dispergiert sind.

**12.** Streichrackel gemäss Anspruch 11, **dadurch gekennzeichnet, dass** die Matrix 2 bis 6 Gew.% B enthält.

**13.** Streichrackel gemäss Anspruch 11, **dadurch gekennzeichnet, dass** die Matrix 5 bis 10 Gew.% P enthält.

**14.** Streichrackel gemäss einem der Ansprüche 11 bis 13, **dadurch gekennzeichnet, dass** der Überzug 5 bis 40 Vol.% Partikel enthält.

**15.** Streichrackel gemäss einem der Ansprüche 11 bis 14, **dadurch gekennzeichnet, dass** der Überzug eine Hv0.1-Härte von über 500 aufweist.

**16.** Streichrackel gemäss Anspruch 15, **dadurch gekennzeichnet, dass** der Überzug eine Hv0.1-Härte $\geq$ 900 aufweist.

**17.** Streichrackel gemäss einem der Ansprüche 11 bis 16, **dadurch gekennzeichnet, dass** das Material der Partikel unter Aluminium-, Zirkonium-, Chromoxid, Siliziumcarbid und Diamant gewählt wird.

**18.** Streichrackel gemäss einem der Ansprüche 11 bis 17, **dadurch gekennzeichnet, dass** der Überzug eine Dicke von 30 bis 250 $\mu$m aufweist.

**19.** Streichrackel gemäss einem der Ansprüche 11 bis 18, **dadurch gekennzeichnet, dass** der Überzug auch Partikel eines festen Schmiermittels, insbesondere PTFE-Partikel, enthält.

**20.** Verwendung einer Streichrackel gemäss einem der Ansprüche 11 bis 19 zum Streichen von Papier.

5 - 15 mm

**FIG1.b**

2

1

2

1

**FIG.1a**

3

**FIG.2**

4

30 - 500 µm

1

5 - 15 mm

## FIG.3a

4

5-15 mm

1

## FIG.3b

**FIG.4a**

**FIG.4b**

FIG.5

EP 1 301 653 B1

FIG.6a

FIG.6b